# EUROPÄISCHE PATENTSCHRIFT

(11) **EP 3 636 936 B1**
(45) Veröffentlichungstag und Bekanntmachung des Hinweises auf die Patenterteilung: **24.03.2021**
(21) Anmeldenummer: 19196149.9
(22) Anmeldetag: 09.09.2019
(51) Int. Cl.: F15B 3/00

(54) **HYDRAULISCHER DRUCKÜBERSETZER UND VERFAHREN ZUR HERSTELLUNG EINER AXIALEN DRUCKSPANNUNG IM HOCHDRUCKZYLINDER**
HYDRAULIC PRESSURE INTENSIFIER AND METHOD FOR PRODUCING AN AXIAL COMPRESSION STRESS IN THE HIGH PRESSURE CYLINDER
MULTIPLICATEUR DE PRESSION HYDRAULIQUE ET PROCÉDÉ DE PRODUCTION D'UNE TENSION DE PRESSION AXIALE DANS LE CYLINDRE HAUTE PRESSION

(30) Priorität: 10.10.2018 AT 508822018
(43) Veröffentlichungstag der Anmeldung: 15.04.2020
(73) Patentinhaber: BFT GmbH, 8682 Hönigsberg (AT)
(72) Erfinder: Trieb, Franz, 8605 Kapfenberg (AT)
(74) Vertreter: Wildhack & Jellinek

(56) Entgegenhaltungen:
- CN-U- 206 309 544
- US-A- 4 818 194
- US-A1- 2012 063 939

## Beschreibung

Die Erfindung betrifft einen hydraulischen Druckübersetzer gemäß dem Oberbegriff des Anspruchs 1.

Derartige Druckübersetzer sind zum Beispiel aus US2012/63939 bekannt und werden im steigenden Maße, beispielsweise in Wasserstrahl-Schneideinrichtungen, verwendet und stellen auf Grund des hohen Druckes im Hochdruckteil besondere Anforderungen an die mechanischen Eigenschaften der Bauteile und an die verwendeten Dichtsysteme im Hinblick auf deren Lebensdauer.

Es sind die unterschiedlichsten Dichtsysteme für eine bewegte Hochdruckkolbenstange im Hochdruckzylinder sowie Hochdruckzylinder im Ventilkörper bzw. Dichtkopf bekannt, die auf eine hohe Lebensdauer und geringen Serviceaufwand gerichtet sind.

Allenfalls erfordert eine Hochdruck-Baugruppe eines hydraulischen Druckübersetzers permanente Druckspannungen in den Dichtungsbereichen. Dazu sind Vorschläge bekannt, Zugbolzen zwischen Ventilkörper und Arbeits- bzw. Niederdruckzylinder anzuordnen und derart Druckspannungen in den Dichtsystemen mit Plungerkolben herzustellen. Auf Grund der erforderlichen Vorspannkräfte ist jedoch gegebenenfalls im Werkzeugsatz eine spezielle hydraulische Vorspanneinrichtung notwendig.

Es ist nun Aufgabe der Erfindung, einen hydraulischen Druckübersetzer der eingangs genannten Art zu schaffen, der die Nachteile im Stand der Technik überwindet und auf einfache Weise eine permanente Druckvorspannung in den Dichtungsbereichen ermöglicht und Service- bzw. Austauscharbeiten von Komponenten in den jeweiligen Hochdruckteilen getrennt zulässt.

Weiters ist es Ziel der Erfindung, ein neues Verfahren zur Herstellung einer axialen Druckspannung in einem Hochdruckzylinder eines hydraulischen Druckübersetzers anzugeben, welches ein gleichmäßiges aneinander Anpressen der Druckflächen in den Dichtungsbereichen von Hochdruckteilen mit gewünschter Vorspannung und mit geringem Aufwand sicherstellt.

Die vorgenannte Aufgabe der Erfindung wird dadurch gelöst, dass der jeweilige Hochdruckzylinder in einer Spannhülse, welche einerseits mit dem Hydraulikzylinder und andererseits mit einem Ventilkörper in lösbarer Verbindung steht, angeordnet ist und im Hydraulikzylinder für jeden Hochdruckzylinder ein Spannkolben axial verschiebbar und durch Druckmittel festlegbar ist und der Spannkolben einerseits Druckflächen zur stirnseitigen Druckbeaufschlagung des Hochdruckzylinder mit einer Hochdruckdichtung für den Plungerkolben und andererseits Druckflächen für eine Druckbeaufschlagung durch den Hydraulikkolben aufweist.

Die mit einem erfindungsgemäßen Druckübersetzer erzielten Vorteile bestehen unter anderem darin, dass der Ventilkörper und der Hydraulikzylinder mittels einer Spannhülse jeweils lösbar, also serviceerleichternd, verbunden sind und dass im Hydraulikzylinder dem Hydraulikkolben vorgeordnet ein Spannkolben angeordnet ist.

Nach einem einfachen Zusammenbau der Komponenten eines Hochdruckteiles kann durch ein Einbringen eines Arbeitsfluids in den gegenüberliegenden Raum des Hydraulikzylinders der Hydraulikkolben mit seinen radialen Druckflächen an diejenigen des Spannkolbens angestellt werden.

Eine einfache weitere Druckerhöhung des Arbeitsfluids bewirkt eine Verschiebung des Spannkolbens in Axrichtung und einen Druckkraftaufbau an der Stirnseite des Hochdruckzylinders mit der Hochdruckdichtung.

Weil nun ein Ventilkörper und der Hydraulikzylinder mittels einer Spannhülse verbunden sind und der Spannkolben auf eine Stirnseite des Hochdruckzylinders drückt, bildet sich auf der gegenüberliegenden Seite am Stützring im Ventilkörper eine wirksame Hochdruckdichtung aus.

Im schweren Betrieb eines hydraulischen Druckübersetzers ist eine Hochdruckdichtung jedoch nur bei einer ausreichend großen mechanischen Vorspannung bzw. einer dergleichen permanenten axialen Druckspannung im Hochdruckzylinder wirksam.

Eine Einstellung der Höhe der permanenten Druckspannung im Hochdruckzylinder wird bei einem erfindungsgemäßen hydraulischen Druckübersetzer dadurch erreicht, dass der Druck des Arbeitsfluids über den Betriebswert erhöht wird, derart der Spannkolben mit erhöhter Druckkraft auf den Hochdruckzylinder wirkt und in dieser Position durch Spannmittel eine axiale Festlegung des Spannkolbens erfolgt.

Somit ist auf einfache Weise jeder Hochdruckteil einzeln einstellbar, wodurch kurze Wartungszeiten und keine eigene Spannvorrichtung benötigt werden.

Der Ventilkörper mit einem Saugventil und einem Druckventil, wie an sich bekannt, weist, wie oben kurz dargelegt, ein Dichtungssystem zum Hochdruckzylinder , beispielsweise einen verformbaren metallischen Stützring, auf, welches bzw. welcher durch eine Druckvorspannung permanent wirksam ist.

Gemäß einer Ausgestaltung der Erfindung ist von Vorteil, wenn der Spannkolben in axialer Position im Hydraulikzylinder durch Spannschrauben gegen Druckkräfte vom Hochdruckzylinder festlegbar ist. Auf einfache Weise kann dadurch eine gleichmäßige Festlegung des Spannkolbens im Hydraulikzylinder nach einer Druckkrafteinstellung des Hochdruckzylinders durch eine Beaufschlagung des Hydraulikkolbens mit Arbeitsfluid mit beispielsweise einem um 30% über dem Betriebswert liegenden Druck erfolgen.

In günstiger Weise ist die Plunger- bzw. Hochdruckkolbenstange in einer Schrumpfhülse festgelegt, welche mit dem Hydraulikkolben in Verbindung steht. Durch diese Ausführungsform der Verbindung wird eine hohe Sicherheit der Ankopplung im Dauerbetrieb erreicht.

Das weitere Ziel der Erfindung, ein neues Verfahren zur Herstellung einer axialen Druckspannung in einem Hochdruckzylinder eines hydraulischen Druckübersetzers anzugeben, wird dadurch erreicht, dass bei Offenstellung mindestens eines der Ventile im Ventilkörper mittels Arbeitsfluids der Hydraulikkolben in Axrichtung an den Spannkolben angestellt und eine Druckerhöhung im Arbeitsfluids auf einen Wert über dem Arbeitsdruck des Druckübersetzers vorgenommen wird, was ein Anpressen des Spannkolbens an die Stirnseite des Hochdruckzylinder sowie der Hochdruckdichtung der Plungerkolbenstange bewirkt, wobei sich in der Folge an der gegenüberliegenden Stirnseite des Hochdruckzylinders am Stützring des Ventilkörpers eine Gegendruckkraft ausbildet, welche Kräfte axiale Druckspannungen im Hochdruckzylinder begründen, wonach durch Spannmittel der Spannkolben festgelegt und die axialen Druckspannungen im Hochdruckzylinder aufrechterhalten werden.

Die mit dem erfindungsgemäßen Verfahren erreichten Vorteile sind im Wesentlichen darin zu sehen, dass mittels einer Erhöhung des Druckes eines Arbeitsfluids ein homogenes aneinander Anpressen der Druckflächen vom Hydraulikkolben und dem Spannkolben und des Weiteren eine Druckwirkung auf die Stirnseite des Hochdruckzylinders sowie auf den Stützring erfolgen. Derart kann eine permanente Hochdruck-Dichtwirkung bei Erhöhung des Druckes im Arbeitsfluid über den Arbeitsdruck erreicht werden.

Eine dabei im Hochdruckzylinder aufgebaute Druckspannung wird verfahrensgemäß durch Festlegung des Spannkolbens im Hydraulikkolben aufrechterhalten.

Im Folgenden soll die Erfindung an einer Skizze, die allenfalls nur einen Ausführungsweg darstellt, näher erläutert werden.

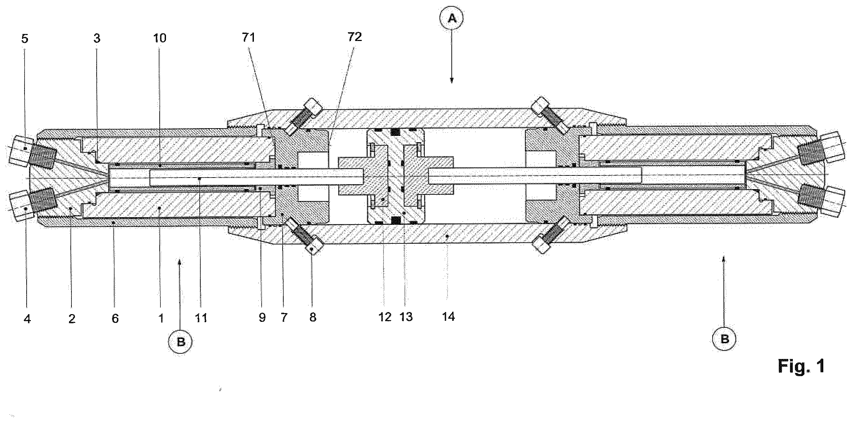

Es zeigt die Fig. 1 einen hydraulischen Druckübersetzer.

Zur leichteren Zuordnung der Teile und Komponenten soll die nachfolgende Bezugszeichenliste dienen.
- A: Niederdruckteil
- B,B': Hochdruckteile
- 1: Hochdruckzylinder
- 2: Ventilkörper
- 3: Stützring
- 4: Saugventil (Einlassventil)
- 5: Druckventil (Auslassventil)
- 6: Spannhülse
- 7: Spannkolben
- 71: Druckfläche zum Hochdruckzylinder
- 72: Druckfläche zum Hydraulikkolben
- 8: Spannschraube
- 9: Hochdruckdichtung
- 10: Ausgleichsbüchse
- 11: Plunger (Hochdruckkolbenstange)
- 12: Schrumpfbüchse
- 13: Hydraulikkolben
- 14: Hydraulikzylinder

In Fig. 1 ist ein erfindungsgemäßer hydraulischer Druckübersetzer bestehend aus einem Niederdruckteil A mit einem doppelt wirkenden Kolben 13 in einem Hydraulikzylinder 14 und beiderseits jeweils ein Hochdruckteil B,B' dargestellt.

Weil die Hochdruckteile gleichgeartet sind, wird in den Erläuterungen lediglich auf den im linken Teil der Fig. 1 gezeigten Hochdruckteil eingegangen.

Im Hydraulikzylinder 14 vom Niederdruckteil A ist ein Kolben 13 angeordnet, der in beide Axrichtungen, durch Arbeitsfluid gesteuert, bewegbar ist.

Der Hydraulikzylinder 14 und ein Ventilkörper 2 sind mittels einer Spannhülse 6 lösbar verbunden, wobei sich in der Spannhülse 6 ein Hochdruckzylinder 1 mit einer Ausgleichsbüchse 10 und ein Plunger bzw. eine Hochdruckkolbenstange 11 befinden, welche Hochdruckkolbenstange 11 durch einen Spannkolben 7 ragt und mittels einer Schrumpfbüchse 12 im Hydraulikkolben 13 festgelegt ist.

Beim Herstellen einer axialen Druckspannung im Hochdruckzylinder wird im Hydraulikzylinder 14 in dem vom Hochdruckteil B abgewandten Teil ein Arbeitsfluid eingebracht (nicht dargestellt) und der Hydraulikkolben 13 mit seiner stirnseitigen Druckfläche an die Druckfläche 72 des Spannkolbens 7 angestellt und bei offenen Spannschrauben 8 axial verschoben. Dadurch kommen die Druckfläche 71 des Spannkolbens 7 und die Stirnfläche des Hochdruckzylinders 1 mit einer Hochdruckdichtung 9 in Kontakt.

Eine Erhöhung des Druckes im Arbeitsfluid verschiebt den Kolben 13 und den Spannkolben 7 weiter gegen den Hochdruckzylinder 1 und vermittelt diesem eine Druckvorspannung, welche die Hochdruckdichtung 9 zur Hochdruckkolbenstange 11 und eine Dichtung durch eine Verformung des Stützringes 3 im Ventilkörper 2 aktiviert.

Der Druck des Arbeitsfluids im Hydraulikzylinder 14 wird in der Folge auf einen Wert über dem vorgesehenen Arbeitsdruck eingestellt, um eine permanente Vorspannung im Hochdruckzylinder 11 und derart eine dauernde Dichtwirkung des Stützringes 3 gegenüber dem Ventilkörper 2 sicherzustellen.

Eine derart erreichte Axposition des Spannkolbens 7 wird durch Festlegungselemente 8, gegebenenfalls mittels Spannschrauben, vom Hydraulikzylinder 14 stabilisiert und diese Positionierung im laufenden Betrieb des Druckübersetzers beibehalten.

## Patentansprüche

1. Hydraulischer Druckübersetzer umfassend einen Niederdruckteil (A) enthaltend einen in beide Axrichtungen, durch ein Arbeitsfluid gesteuert verschiebbaren Hydraulikkolben (13) in einem Hydraulikzylinder (14) und beidseitig gegenüberliegend einen Hochdruckteil (B, B') mit jeweils einem mittels des Hydraulikkolbens (13) bewegbaren Plungerkolben (11) in einem Hochdruckzylinder (1), der einerseits mit dem Hydraulikzylinder (14) und andererseits mit einem Ventilkörper (2) unter Verwendung von Dichtsystemen in Druckkontakt seht, wobei der jeweilige Hochdruckzylinder (1) in einer Spannhülse (6), welche einerseits mit dem Hydraulikzylinder (14) und andererseits mit einem Ventilkörper (2) in lösbarer Verbindung steht, angeordnet ist, **dadurch gekennzeichnet dass** im Hydraulikzylinder (14) für jeden Hochdruckzylinder (1) ein Spannkolben (7) axial verschiebbar und durch Druckmittel (8) festlegbar ist und der Spannkolben (7) einerseits Druckflächen (71) zur stirnseitigen Druckbeaufschlagung des Hochdruckzylinders (1) mit einer Hochdruckdichtung (9) für den Plungerkolben (11) und andererseits Druckflächen (72) für eine Druckbeaufschagung durch den Hydraulikkolben (13) aufweist.

2. Hydraulischer Druckübersetzer nach Anspruch 1, **dadurch gekennzeichnet, dass** der Ventilkörper (2), wie an sich bekannt, ein Saugventil (4) und ein Druckventil (5) mit Verbindungen zum Innenbereich des Hochdruckzylinders (1) und ein Dichtungssystem bzw. einen Stützring (3) zum Hochdruckzylinder (1) hin aufweist.

3. Hydraulischer Druckübersetzer nach Anspruch 1 oder Anspruch 2, **dadurch gekennzeichnet, dass** der Spannkolben (7) in axialer Position im Hydraulikzylinder (14) durch Spannschrauben (8) gegen Druckkräfte vom Hochdruckzylinder (1) festlegbar ist.

4. Hydraulischer Druckübersetzer nach einem der Ansprüche 1 bis 3, **dadurch gekennzeichnet, dass** die Plunger- bzw. Hochdruckkolbenstange (11) in einer Schrumpfbüchse (12) festgelegt ist, welche mit dem Hydraulikkolben (13) in Verbindung steht.

5. Verfahren zur Herstellung einer axialen Druckspannung in einem Hochdruckzylinder von hydraulischen Druckübersetzern nach den vorgeordneten Ansprüchen, **dadurch gekennzeichnet, dass** bei Offenstellung mindestens eines der Ventile (4,5) im Ventilkörper (2) mittels Arbeitsfluids der Hydraulikkolben (13) in Axrichtung an den Spannkolben (7) angestellt und eine Druckerhöhung des Arbeitsfluids auf einen Wert von über dem Arbeitsdruck des Druckübersetzers vorgenommen wird, was ein Anpressen des Spannkolbens (7) an die Stirnseite des Hochdruckzylinders (1) sowie der Hochdruckdichtung (9) der Plungerkolbenstange bewirkt, wobei sich in der Folge an der gegenüberliegenden Stirnseite des Hochdruckzylinders (1) am Stützring (3) des Ventilkörpers (2) eine Gegendruckkraft ausbildet, welche Kräfte axiale Druckspannungen im Hochdruckzylinder (1) begründen, wonach durch Spannmittel (8) der Spannkolben (7) festgelegt und die axialen Druckspannungen im Hochdruckzylinder (1) aufrechterhalten werden.

## Claims

1. Hydraulic pressure intensifier comprising a low-pressure segment (A) containing a hydraulic piston (13) displaceable in both axial directions controlled by a working fluid in a hydraulic cylinder (14) and on both opposite sides a high-pressure segment (B, B') respectively with a plunger piston (11) movable by means of the hydraulic piston (13) in a high-pressure cylinder (1), which is in pressure contact, on the one hand, with the hydraulic cylinder (14) and, on the other hand, with a valve body (2) using sealing systems, wherein the respective high-pressure cylinder (1) is arranged in a clamping sleeve (6), which is in releasable connection, on the one hand, with the hydraulic cylinder (14) and, on the other hand, with a valve body (2),
**characterised in that**
in the hydraulic cylinder (14) for each high-pressure cylinder (1) a clamping piston (7) is axially displaceable and fixable by pressure means (8) and the clamping piston (7) has, on the one hand, pressure faces (71) for pressuring the end face of the high-pressure cylinder (1) with a high-pressure seal (9) for the plunger piston (11) and, on the other hand, pressure faces (72) for pressurising with the hydraulic piston (13).

2. Hydraulic pressure intensifier according to claim 1, **characterised in that** the valve body (2), as known, has a suction valve (4) and a pressure valve (5) with connections to the interior of the high-pressure cylinder (1) and a sealing system or a support ring (3) towards the high-pressure cylinder (1).

3. Hydraulic pressure intensifier according to claim 1 or claim 2, **characterised in that** the clamping piston (7) can be fixed in axial position in the hydraulic cylinder (14) by clamping screws (8) against pressure forces of the high-pressure cylinder (1).

4. Hydraulic pressure intensifier according to any of claims 1 to 3, **characterised in that** the plunger or high-pressure piston rod (11) is fixed in a shrink bushing (12) which is connected to the hydraulic piston (13).

5. Method for producing an axial compression stress in a high-pressure cylinder of hydraulic pressure intensifiers according to the preceding claims, **characterised in that** on opening at least one of the valves (4, 5) in the valve body (2) by means of working fluid the hydraulic piston (13) is positioned in axial direction on the clamping piston (7) and the pressure of the working fluid is increased to a value above the working pressure of the pressure intensifier, which causes the clamping piston (7) to be pressed against the end face of the high-pressure cylinder (1) and the high-pressure seal (9) of the plunger piston rod, wherein as a result on the opposite end face of the high-pressure cylinder (1) on the support ring (3) of the valve body (2) an opposing compressive force is formed, which forces cause axial compression stresses in the high-pressure cylinder (1), after which the clamping piston (7) is fixed by clamping means (8) and the axial compression stresses in the high-pressure cylinder (1) are maintained.

## Revendications

1. Multiplicateur de pression hydraulique comprenant une partie basse pression (A) contenant un piston hydraulique (13) pouvant être décalé dans les deux directions axiales contrôlé par un fluide de travail dans un cylindre hydraulique (14) et, de manière opposée des deux côtés, une partie haute pression (B, B') avec respectivement un piston plongeur (11) pouvant être déplacé au moyen du piston hydraulique (13) dans un cylindre haute pression (1), lequel se trouve en contact sous pression d'une part avec le cylindre hydraulique (14) et d'autre part avec un corps de soupape (2), en utilisant des systèmes de joint, dans lequel
le cylindre haute pression respectif (1) est agencé dans un manchon de serrage (6), lequel se trouve en raccordement amovible d'une part avec le cylindre hydraulique (14) et d'autre part avec un corps de soupape (2), **caractérisé en ce que**, dans le cylindre hydraulique (14), pour chaque cylindre haute pression (1), un piston de serrage (7) peut être décalé axialement et peut être fixé par des moyens de pression (8) et le piston de serrage (7) présente, d'une part, des surfaces de pression (71) pour la mise en pression du cylindre haute pression (1) sur la face frontale avec un joint haute pression (9) pour le piston plongeur (11) et, d'autre part, des surfaces de pression (72) pour une mise en pression par le piston hydraulique (13).

2. Multiplicateur de pression hydraulique selon la revendication 1, **caractérisé en ce que** le corps de soupape (2), comme cela est connu en soi, présente une soupape d'aspiration (4) et une soupape de pression (5) avec des raccordements à la zone intérieure du cylindre haute pression (1) et un système de joint ou une bague d'appui (3) vers le cylindre haute pression (1).

3. Multiplicateur de pression hydraulique selon la revendication 1 ou la revendication 2, **caractérisé en ce que** le piston de serrage (7) peut être fixé en position axiale dans le cylindre hydraulique (14) par des vis de serrage (8) contre des forces de pression du cylindre haute pression (1).

4. Multiplicateur de pression hydraulique selon l'une quelconque des revendications 1 à 3, **caractérisé en ce que** la tige de piston plongeur ou haute pression (11) est fixée dans une douille rétractable (12), laquelle se trouve en raccordement avec le piston hydraulique (13).

5. Procédé pour produire une contrainte de compression axiale dans un cylindre haute pression de multiplicateurs de pression hydraulique selon les revendications précédentes, **caractérisé en ce que**, lorsqu'au moins une des soupapes (4,5) dans le corps de soupape (2) est en position ouverte, le piston hydraulique (13) est appliqué sur le piston de serrage (7) au moyen d'un fluide de travail dans la direction axiale et une augmentation de pression du fluide de travail est effectuée à une valeur supérieure à la pression de travail du multiplicateur de pression, ce qui provoque un pressage du piston de serrage (7) contre la face frontale du cylindre haute pression (1) ainsi que du joint haute pression (9) de la tige de piston plongeur, dans lequel une force de contre-pression se forme ensuite au niveau de la face frontale opposée du cylindre haute pression (1) sur la bague d'appui (3) du corps de soupape (2), lesquelles forces établissent des contraintes de compression axiale dans le cylindre haute pression (1), après quoi le piston de serrage (7) est fixé par des moyens de serrage (8) et les contraintes de compression axiale dans le cylindre haute pression (1) sont maintenues.
